Europäisches Patentamt

European Patent Office

Office européen des brevets

(19)

(11) Veröffentlichungsnummer: **0 258 756**
**A2**

## (12) EUROPÄISCHE PATENTANMELDUNG

(21) Anmeldenummer: 87112132.3

(22) Anmeldetag: 21.08.87

(51) Int. Cl.⁴: **C01G 23/02** , C22B 34/12

(30) Priorität: 03.09.86 DE 3629973

(43) Veröffentlichungstag der Anmeldung:
09.03.88 Patentblatt 88/10

(84) Benannte Vertragsstaaten:
BE DE GB

(71) Anmelder: BAYER AG
Konzernverwaltung RP Patentabteilung
D-5090 Leverkusen 1 Bayerwerk(DE)

(72) Erfinder: Lailach, Günter, Dr.
Bodelschwinghstrasse 23
D-4150 Krefeld(DE)
Erfinder: Dietz, Wolfgang, Dipl.-Ing.
Dörperhofstrasse 16
D-4150 Krefeld(DE)

(54) Vorrichtung und Verfahren zur Herstellung von Titantetrachlorid.

(57) Die vorliegende Erfindung betrifft ein Verfahren zur Herstellung von Titantetrachlorid durch Chlorierung titanhaltiger Rohstoffe in Gegenwart von Reduktionsmitteln bei Temperaturen von 800 bis 1200°C unter Bildung titantetrachloridhaltiger Reaktionsgase, Abtrennung von Stäuben und festen Metallchloriden und Kondensation des Titantetrachlorids in Kondensatoren durch direktes Kühlen der Reaktionsgase mit flüssigem Titantetrachlorid.

EP 0 258 756 A2

## Vorrichtung und Verfahren zur Herstellung von Titantetrachlorid

Die Erfindung betrifft ein Verfahren zur Herstellung von Titantetrachlorid durch Chlorierung titanhaltiger Rohstoffe in Gegenwart von Reduktionsmitteln bei Temperaturen von 800 bis 1200°C unter Bildung titantetrachloridhaltiger Reaktionsgase, Abtrennung von Stäuben und festen Metallchloriden und Kondensation des Titantetrachlorids in Kondensatoren durch direktes Kühlen der Reaktionsgase mit flüssigem Titantetrachlorid.

Titantetrachlorid wird vorwiegend durch Umsetzung titanhaltiger Rohstoffe mit Chlor und Sauerstoff unter reduzierenden Bedingungen bei 800 - 1200°C hergestellt (US-A 2 446 181, DE-A 1 923 479, JP-A 76 30 598). Die dabei gebildeten Reaktionsgase enthalten neben Titantetrachlorid Stäube der festen Rohstoffe und die aus Verunreinigungen der Rohstoffe gebildeten Metallchloride, insbesondere FeCl$_2$, FeCl$_3$ und AlCl$_3$.

Nach der Abtrennung von festen Metallchloriden und Stäuben werden die Reaktionsgase durch direktes Behandeln mit flüssigem Titantetrachlorid so weit abgekühlt, daß nahezu alles Titantetrachlorid kondensiert. Diese Kondensation erfolgt in der Regel in zwei Stufen.

In einem ersten Kondensator werden die im allgemeinen ca. 150 bis 200°C heißen Reaktionsgase mit wassergekühltem Titantetrachlorid auf ca. 40 bis 60°C abgekühlt. Dabei werden ca. 75-90 % des Titantetrachlorids kondensiert.

Die im Reaktionsgas verbleibende Titantetrachloridmenge wird in einem zweiten Kondensator mit kältemittelgekühltem Titantetrachlorid auf eine Temperatur unter 0°C gekühlt.

Als Titantetrachlorid-Produktion wird kontinuierlich ein Teil des sich im Kreislauf befindlichen Titantetrachlorids abgezogen.

Die Titantetrachlorid-Kreislaufmenge kann in weiten Grenzen variiert werden, jedoch bedeuten große Kreislaufmengen eine Beeinträchtigung der Wirtschaftlichkeit des Verfahrens.

Bei der Kühlung der Reaktionsgase auf Temperaturen unter 0° C gehen in den Reaktionsgasen verbliebene Metallchloride in den festen Zustand über. Zusammen mit nicht abge trennten Resten der anderen Metallchloride und der Stäube können diese Metallchloride zu Verstopfungen in den Kondensatoren führen.

Um den Energiebedarf der Kühlung zu senken, wird in der JP-A 76 30 598 verschlagen, die Titantetrachloridkondensation durch stufenweise Kühlung der Reaktionsgase mittels eingespritztem Titantetrachlorid in vier mit bewegten Ketten ausgerüsteten Kühltürmen durchzuführen. Die bewegten Ketten haben dabei die Aufgabe, abgeschiedene feste Metallchloride von den Kühlflächen der Kühltürme abzustreifen, damit die Wärmeabführung an diesen Kühlflächen nicht behindert wird. Dieses Verfahren ist aber apparativ sehr aufwendig. Außerdem unterliegen die bewegten Ketten einem hohen Verschleiß.

Die Aufgabe der Erfindung bestand darin, ein besonders vorteilhaftes Verfahren zur Herstellung von Titantetrachlorid bereitzustellen, daß die Nachteile der bekannten Verfahren, insbesondere bei der Kondensation von Titantetrachlorid aus den Reaktionsgasen, nicht aufweist.

Überraschenderweise konnte die Aufgabe dadurch gelöst werden, daß die Kondensation in Kondensatoren durchgeführt wurde, in denen mehrere Düsenböden übereinander angeordnet sind.

Gegenstand der Erfindung ist somit ein Verfahren zur Herstellung von Titantetrachlorid durch Chlorierung titanhaltiger Rohstoffe in Gegenwart von Reduktionsmitteln bei Temperaturen von 800 bis 1200°C unter Bildung titantetrachloridhaltiger Reaktionsgase, Abtrennung von Stäuben und festen Metallchloriden und Kondensation des Titantetrachlorids in Kondensatoren durch direktes Kühlen der Reaktionsgase mit flüssigem Titantetrachlorid, welches dadurch gekennzeichnet ist, daß in den Kondensatoren mehrere Düsenböden übereinander so angeordnet werden, daß zwischen den einzelnen Düsenböden ein Freiraum von 100 bis 1500 mm besteht und flüssiges Titantetrachlorid auf den oberen Düsenboden aufgebracht wird.

Es ist vorteilhaft, den Abstand zwischen den einzelnen Düsenböden so zu wählen, daß der Freiraum 200 bis 400 mm beträgt.

Bevorzugt sind Düsenböden, die aus aneinandergefügten Venturi-Düsen bestehen.

Die Düsenböden als solche sind bekannt. Sie können aus keramischen Materialien oder aus metallischen Werkstoffen, insbesondere aus Stahl, gefertigt sein und haben beispielsweise bei einer Höhe von 100 mm eine obere und untere Öffnung der Venturi-Düsen von 40 mm, wobei die Kehle 35 mm über dem unteren Gaseintritt liegt. Variationen unter Beachtung der Konstruktions-und Wirkungsprinzipien von Venturi-Düsen sind möglich, ohne daß dadurch die Lehre der vorliegenden Erfindung beeinflußt würde.

Das flüssige Titantetrachlorid wird mittels einer oder mehrerer Düsen auf den oberen Düsenboden aufgebracht, wobei Vollkegeldüsen bevorzugt werden. Es ist aber auch möglich, das flüssige Titantetrachlorid über eine Rohrleitung direkt ohne Einsatz von Düsen aufzubringen.

Es ist sehr vorteilhaft Kondensatoren zu verwenden, in denen eine Vorrichtung zum Abstreifen von flüssigen Gasbestandteilen, insbesondere Titantetrachloridtröpfchen, oberhalb des oberen Düsenbodens eingebaut ist. Vorzugsweise besteht diese Vorrichtung aus einem Lamellentropfenabscheider; es kann aber auch eine Füllkörperschicht oder ein Wire-mesh sein.

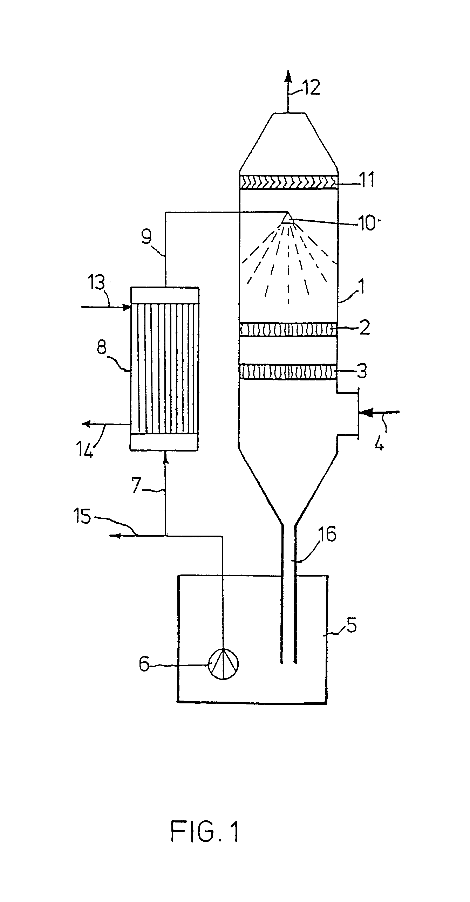

Das erfindungsgemäße Verfahren soll zur Verdeutlichung anhand Fig. 1 näher erläutert werden.

Das nach der Umsetzung von titanhaltigen Rohstoffen mit Chlor, Sauerstoff und einem Reduktionsmittel erhaltene Reaktionsgas wird mit flüssigem Titantetrachlorid auf 150 bis 200°C gekühlt. Nach Abtrennung fester Metallchloride wird das Reaktionsgas einer zweistufigen Kondensation unterzogen. Dazu wird das Reaktionsgas (4) in einen ersten erfindungsgemäßen Kondensator (1) eingeleitet.

Der Kondensator (1) ist mit zwei (oder mehr) Düsenböden (2) und (3) ausgerüstet. Sie werden von unten mit den zu kühlenden und zu kondensierenden Reaktionsgasen (4) durchströmt. Das aus der Vorlage (5) mittels Pumpe (6) im Kreislauf geförderte Titantetrachlorid (7) wird im Wärmetauscher (8) gekühlt. Das gekühlte Titantetrachlorid (9) wird durch die Düsen (10) so in den Kondensator (1) eingesprüht, daß der gesamte Düsenboden (2) möglichst gleichmäßig mit Titantetrachlorid beaufschlagt wird. Die Einbauhöhe der Düsen (10) richtet sich nach der Verteilungscharakteristik des Sprühkegels der verwendeten Düsen.

Über der Düse befindet sich eine Vorrichtung zum Abstreifen von Titantetrachloridtröpfchen (11).

In dieser ersten Kühlstuffe, in der der Titantetrachloridkreislauf mit Kühlwasser (13, 14) gekühlt wird, werden im Kondensator (1) noch relativ viel Feststoffe abgeschieden und mit dem abfließenden Titantetrachlorid (16) in die Vorlage (5) eingetragen. Da diese Feststoffe zu erhöhtem Verschleiß vor allem der Kreislaufpumpe (6) und der Düse (10) führen, kann die Vorlage (5) vorteilhaft als Eindicker ausgeführt werden, aus dem unten ein feststoffreicher Schlamm abgezogen wird, der zur Kühlung der heißen Reaktionsgase auf 150-200°C verwendet wird. Das produzierte Titantetrachlorid (15) kann aus dem feststoffärmeren Kreislauf-Titantetrachlorid (7) entnommen werden.

Zur vollständigen Kondensation des Titantetrachlorids aus den Reaktionsgasen (12) werden diese in einen zweiten erfindungsgemäßen Kondensator eingeleitet. Dieser Kondensator ist analog dem ersten aufgebaut. Zur Kühlung des Titantetrachlorids (7) wird hier anstelle von Kühlwasser (13, 14) ein Kältemittel eingesetzt.

Das produzierte Titantetrachlorid (15) wird aus dem feststoffärmeren Kreislauf-Titantetrachlorid (7) entnommen.

Ein Vorteil des erfindungsgemäßen Verfahrens liegt darin, daß mit relativ kleinen Titantetrachlorid-Kreislaufmengen eine effektive Abkühlung der Reaktionsgase und Kondensation von Titantetrachlorid erreicht wird.

Die mehrstufige Kondensation an den Düsenböden (2) und (3) ermöglicht eine relativ große Temperaturdifferenz zwischen Titantetrachlorideinspeisung (9) und Titantetrachloridablauf (16). Durch diese große Temperaturdifferenz wird die Wärmeabführung aus dem System in den Wärmetauschern (8) mit relativ wenig Kühlmittel ermöglicht.

Ein weiterer Vorteil des erfindungsgemäßen Verfahrens ist, daß eine Verstopfung des Kondensators auch bei höheren Feststoffgehalten der Reaktionsgase weitestgehend ausgeschlossen ist.

Durch den störungsfreien Betrieb der Kondensatoren und den geringeren Kühlmittelverbrauch wird die Wirtschaftlichkeit des Verfahrens deutlich verbessert.

Die Vorteile des erfindungsgemäßen Verfahrens sollen durch den Vergleich der Titantetrachloridherstellung mit einem herkömmlichen Kondensationssystem (Beispiel 1) und der Titantetrachloridherstellung gemäß der Erfindung (Beispiel 2) verdeutlicht werden.

Beispiel 1 (Vergleichsbeispiel)

Aus einem Chlorierungsreaktor wurden 1970 m³ Reaktionsgase/h mit ca. 800°C ausgespeist (alle aufgeführten Gasmengen beziehen sich auf Standardbedingungen). Die Gase wurden durch Einsprühen von 12 t feststoffreichem Titantetrachlorid pro Stunde auf 190°C gekühlt. Die bei dieser Temperatur festen Metallchloride und die Stäube der Rohstoffe wurden in einem Zyklonabscheider weitgehend abgeschieden. Die in das Tetrachlorid-Kondensationssystem eingespeisten Gase und Dämpfe (3350 m³/h) enthielten 60,7 Vol.-% Titantetrachlorid; 23,8 Vol-% CO; 12,9 Vol-% $CO_2$; 2,43 Vol-% $N_2$ und ca. 0,3 Vol.-% $SiCl_4$, $VOCl_3$, $VCl_4$, $Cl_2$, HCl und sonstige Verunreinigungen. Im ersten Kühlkreislaufsystem wurden die Gase in einem Kondensator mit wassergekühltem Titantetrachlorid gekühlt. Der Kondensator war ähnlich dem in der Abbildung dargestellten Kondensator (1) gebaut. Anstelle der Düsenböden (2) und (3) waren einfache Gitterroste eingebaut. Außerdem fehlte der Lamellentropfenabscheider (11). Es wurden ca. 800 m³ Titantetrachlorid pro Stunde mit 35°C eingespeist. Das in die Vorlage abfließende Titantetrachlorid hatte eine Temperatur von ca. 39,5°C. Das aus dem Kondensator austretende Gas hatte eine Temperatur von ca. 44°C; es enthielt 5 Vol-% Titantetrachloriddampf und ca. 100 g Titantetrachloridtröpfchen/m³. In den Röhrenwärmetauscher zur Kühlung des TiCl₄-Kreislaufs wurden 100 m³ Kühlwasser/h mit einer Temperatur von 18°C eingespeist, das mit 30°C abfloß. Das auf 44°C gekühlte Gas wurde in den Kondensator des zweiten Kühlkreislaufsystems eingespeist. Der Kondensator war ähnlich dem des ersten Kühlkreislaufsystems gebaut, jedoch betrug der Durchmesser statt 1,0 m nur 0,55 m und im Kopfteil des Kondensators war ein Lamellentropfenabscheider eingebaut. In diesem Kühlsystem wurden 110 m³ Titantetrachlorid pro Stunde durch einen Wärmetauscher gefördert, in dem das Titantetrachlorid durch verdampfenden Ammoniak von -7°C auf -11°C gekühlt wurde. Die Kühlleistung betrug 360 000 kJ/h.

### Beispiel 2

Die Titantetrachloridkondensation aus den auf 190°C gekühlten Reaktionsgasen (Zusammensetzung und Mengen wie in Beispiel 1) erfolgte gemäß dem erfindungsgemäßen Verfahren in zwei Kühlsystemen entsprechend der Abbildung. In den Kondensator des ersten Kühlsystems (Durchmesser 1,0 m) waren zwei Düsenböden aus keramischem Material (Fa. VFK) mit je 360 Venturi-Düsen eingebaut. Es wurden 140 m³ feststoffarmes Titantetrachlorid pro Stunde mit einer Temperatur von 35°C durch eine Vollkegeldüse in den Kondensator eingespeist. Das aus dem Kondensator in den als Vorlage dienenden Eindicker abfließende Titantetrachlorid hatte eine Temperatur von 61°C. Das gekühlte Gas hatte eine Temperatur von 37°C und enthielt nach der Tropfenabscheidung mit dem Lamellentropfenabscheider ca. 6 g Titantetrachloridtröpfchen/m³. Der Wärmetauscher zur Kühlung des Kreislauf-Titantetrachlorids wurde mit 55 m³ Kühlwasser (18°C) beaufschlagt, das mit 40°C zum Kanal abfloß.

Im zweiten Kühlsystem war der Kondensator analog dem des ersten Kühlsystems gebaut. Bei einem Durchmesser von 0,55 m enthielten die Düsenböden je 113 Düsen. Die Temperatur des in die Vorlage abfließenden Titantetrachlorids betrug -3 bis -4°C, die des Abgases -9 bis -10°C. Die Kühlleistung des Wärmetauschers betrug 210 000 kJ/h.

### Ansprüche

1. Verfahren zur Herstellung von Titantetrachlorid durch Chlorierung titanhaltiger Rohstoffe in Gegenwart von Reduktionsmitteln bei Temperaturen von 800 bis 1200°C unter Bildung titantetrachloridhaltiger Reaktionsgase, Abtrennung von Stäuben und festen Metallchloriden und Kondensation des Titantetrachlorids in Kondensatoren durch direktes Kühlen der Reaktionsgase mit flüssigem Titantetrachlorid, dadurch gekennzeichnet, daß in den Kondensatoren mehrere Düsenböden übereinander so angeordnet werden, daß zwischen den einzelnen Düsenböden ein Freiraum von 100 bis 1500 mm besteht und flüssiges Titantetrachlorid auf den oberen Düsenböden aufgebracht wird.

2. Verfahren gemäß Anspruch 1, dadurch gekennzeichnet, daß der Freiraum 200 bis 400 mm beträgt.

3. Verfahren gemäß Anspruch 1 oder 2, dadurch gekennzeichnet, daß die Düsenböden aus aneinandergefügten Venturi-Düsen bestehen.

4. Verfahren gemäß einem oder mehrerer der Ansprüche 1 bis 3, dadurch gekennzeichnet, daß das flüssige Titantetrachlorid auf den oberen Düsenboden mittels einer oder mehrerer Vollkegeldüsen aufgebracht wird.

5. Verfahren gemäß einem oder mehrerer der Ansprüche 1 bis 4, dadurch gekennzeichnet, daß oberhalb des oberen Düsenbodens Lamellentropfenabscheider eingebaut sind.

FIG. 1

LeA 24020